# EUROPÄISCHE PATENTSCHRIFT

(11) **EP 2 113 738 B1**
(45) Veröffentlichungstag und Bekanntmachung des Hinweises auf die Patenterteilung: **20.11.2013**
(21) Anmeldenummer: 09005815.7
(22) Anmeldetag: 27.04.2009
(51) Int. Cl.: F41H 5/26

(54) **Klappwinkelspiegel für Kampffahrzeuge**
Articulated periscope mirror for military vehicles
Périscope avec miroir à angle repliable pour véhicules de combat

(30) Priorität: 29.04.2008 DE 102008021486
(43) Veröffentlichungstag der Anmeldung: 04.11.2009
(73) Patentinhaber: Krauss-Maffei Wegmann GmbH & Co. KG, 80997 München (DE)
(72) Erfinder: Frimberger, Georg, 85716 Unterschleißheim (DE); Neumayer, Richard, 82140 Olching (DE)
(74) Vertreter: Feder Walter Ebert

(56) Entgegenhaltungen:
- DE-A1- 2 708 601
- DE-T2- 69 824 931
- DE-U1-202006 004 548
- GB-A- 1 144 898
- US-A- 4 033 677
- US-A- 4 145 119

## Beschreibung

Die Erfindung betrifft einen Klappwinkelspiegel für Kampffahrzeuge mit einem Ausblickkopf und einem gegenüber dem Ausblickkopf schwenkbar angeordneten Einblickspiegel, der von einer Einbtickstellung in eine Schließstellung bewegbar ist, und einer Strahlfalle, die in der Schließstellung zwischen dem Einblickspiegel und dem Ausblickkopf angeordnet ist.

Klappwinkelspiegel werden u. a. bei gepanzerten Kampffahrzeugen eingesetzt und dienen dazu, der Besatzung des Kampffahrzeugs einen Blick aus dem Fahrzeuginneren in Richtung der Fahrzeugumgebung zu ermöglichen.

Klappwinkelspiegel bestehen üblicherweise aus einem zumindest teilweise außerhalb des Fahrzeugs angeordneten Ausblickkopf und einem im Fahrzeuginneren angeordneten Einblickspiegel. Sowohl der Einblickspiegel als auch der Ausblickkopf sind mit Spiegelelementen versehen, die in der Einblickstellung so zueinander angeordnet sind, dass ein Blickweg aus dem Fahrzeuginneren durch Umlenkung über die Spiegelelemente nach fahrzeugaußen geführt wird. Die Spiegelelemente befinden sich dabei in einer in etwa parallelen Anordnung, in welcher sie einen Winkel von in etwa 45° mit der Horizontalen bzw. der Fahrebene des Fahrzeugs einschließen.

Der fahrzeuginnen liegende Einblickspiegel ist von dieser Einblickstellung in eine Schließstellung bewegbar, in welcher er eine in etwa horizontale Stellung unter dem Fahrzeugdach einnimmt. In diese Stellung wird der Einblickspiegel in jenen Fahrsituationen bewegt, in denen ein Herausblicken aus dem Fahrzeuginneren nicht erforderlich bzw. gewünscht ist. Der Klappwinkelspiegel ist in der Schließstellung von insgesamt kompakter Form, da der Einblickspiegel nicht wesentlich in den Fahrzeuginnenraum hineinragt.

Als problematisch hat sich in der Schließstellung erwiesen, dass der Einblickspiegel eine im wesentlichen horizontale Position einnimmt und das am Ausblickkopf vorgesehene Spiegelelement diesem gegenüber geneigt verläuft, wodurch in den Klappwinkelspiegel eintretende Lichtstrahlen, etwa die Sonnenstrahlung, über das am Ausblickkopf befestigte Spiegelelement auf das Spiegelelement des Einblickspiegels reflektiert und von dort über das Spiegelelement des Ausblickkopfes wieder aus dem Klappwinkelspiegel hinausreflektiert werden. Diese Lichtreflexe können über große Entfernungen hinweg erkannt werden, was gerade bei militärischen Fahrzeugen von Nachteil ist.

Um solche Rückreflektionen zu vermeiden, ist es daher bekannt, in der Schließstellung zwischen dem Einblickspiegel und dem Ausblickkopf eine Strahlfalle anzuordnen, die derartige Rückreflektionen aus dem Inneren des Klappwinkelspiegels verhindert. Ein in den Klappwinkelspiegel eintretender Lichtstrahl wird über das am Ausblickkopf vorgesehene Spiegelelement nicht auf den Einblickspiegel, sondern auf die Strahlfalle umgelenkt, die Reflektionen des eingestrahlten Lichts aus dem Klappwinkelspiegel unterdrückt.

Bei bekannten Lösungen wird als Strahlfalle ein flächiges Element aus optisch absorbierendem Material verwendet, das von Hand in den Bereich zwischen dem Ausblickkopf und dem Einblickspiegel gebracht wird. Beispielsweise wird die Strahlfalle über Befestigungselemente, wie zum Beispiel Klettverschlüsse, in geeigneter Position festgelegt und anschließend oder gleichzeitig der Einblickspiegel in die Schließstellung bewegt.

Diese Art von Klappwinkelspiegeln hat sich hinsichtlich deren Handhabung als nachteilig erwiesen, da die Bedienperson mit der einen Hand den Finblickspiegel bewegen und mit der anderen Hand die Strahlfalle positionieren muss. Bei manchen Klappwinkelspiegeln ist es sogar erforderlich, die Strahlfalle in einem gesonderten Arbeitsschritt in die gewünschte Position zu bringen, wodurch sich eine vergleichsweise lange Überführungszeit für den Wechsel zwischen Einblick- und Schließstellung ergibt.

**Aufgabe** der Erfindung ist es, einen Klappwinkelspiegel bereitzustellen, bei welchem die Strahlfalle mit wenig Handhabungsaufwand zügig in die gewünschte Position verbringbar ist.

Diese Aufgabe wird bei einem Klappwinkelspiegel der eingangs genannten Art dadurch **gelöst**, dass die Strahlfalle derart ausgebildet ist, dass sie sich bei einer Bewegung des Einblickspiegels in die Schließstellung selbsttätig zwischen den Einblickspiegel und den Ausblickkopf bewegt.

Durch die selbsttätige Bewegung der Strahlfalle ist es für das Bedienpersonal nicht erforderlich, bei der Überführung des Einblickspiegels in die Schließstellung die Strahlfalle gesondert zu handhaben. Es ergibt sich eine gleichsam schnelle wie einfache Bedienung des Klappwinkelspiegels.

Eine Ausgestaltung der Erfindung sieht vor, dass die Strahlfalle mit dem Einblickspiegel mechanisch gekoppelt ist, wodurch sich die selbsttätige Bewegung der Strahlfalle auf konstruktiv einfache Weise realisieren lässt.

Weiter wird vorgeschlagen, dass ein erstes Ende der Strahlfalle an einer Schwenkachse schwenkbeweglich angeordnet ist. Auch dies ist vorteilhaft im Hinblick auf eine einfache Bauweise des Klappwinkelspiegels.

Weiter wird vorgeschlagen, dass ein zweites Ende der Strahlfalle an dem Einblickspiegel anliegt. Das an dem Einblickspiegel anliegende, freie Ende der Strahlfalle kann auf diese Weise bei einer Bewegung des Einblickspiegels in die Schließstellung mitgenommen werden, bis es sich in der Schließstellung zwischen dem Einblickspiegel und dem Ausblickkopf befindet.

In diesem Zusammenhang ist es vorteilhaft, wenn das zweite Ende der Strahlfalle unter dem Einfluss einer Feder an dem Einblickspiegel anliegt. Hierdurch wird erreicht, dass die Strahlfalle bei einer Bewegung des Einblickspiegels aus der Schließstellung in Richtung der Einblickstellung den Bewegungen des Einblickspiegels folgt.

Weiter wird vorgeschlagen, dass das zweite Ende der Strahlfalle eine Rundung aufweist. Die Rundung vereinfacht die Bewegung der Strahlfalle entlang des Einblickspiegels während der Schließ- bzw. Öffnungsbewegung.

Weiter wird vorgeschlagen, dass die Strahlfalle ein flächiges Element ist. Die Ausgestaltung der Strahlfalle als ein flächiges, optische Strahlung absorbierendes Element ermöglicht eine kompakte Bauweise des Klappwinkelspiegels.

Weiter wird vorgeschlagen, dass die Strahlfalle aus einem optisch nicht reflektierenden Material besteht, wodurch Rückreflektionen eines auf die Strahlfalle treffenden Lichtstrahls unterdrückt werden.

Weiter wird vorgeschlagen, dass die Schwenkachse der Strahlfalle und die Achse der Feder voneinander beabstandet sind.

In diesem Zusammenhang wird weiter vorgeschlagen, dass die Schwenkachse und die Achse der Feder über ein Zwischenelement miteinander gekoppelt sind.

Weitere Einzelheiten und Vorteile der Erfindung werden nachfolgend unter Zuhilfenahme der beigefügten Zeichnungen eines bevorzugten Ausführungsbeispiels erläutert. Darin zeigen:
- Fig. 1: eine Ansicht des Klappwinkelspiegels in der Einblickstellung aus der Einblickrichtung her betrachtet,
- Fig. 2: eine Schnittansicht des Klappwinkelspiegels gemäß der in Fig. 1 mit II-II bezeichneten Schnittlinie,
- Fig. 3: eine Ansicht des Klappwinkelspiegels gemäß Fig. 1 in der Schließstellung,
- Fig. 4: eine Schnittdarstellung gemäß der in Fig. 3 mit IV-IV bezeichneten Schnittlinie,
- Fig. 5: eine vergrößerte Detaildarstellung der in Fig. 4 mit V bezeichneten Einzelheit,
- Fig. 6: eine vergrößerte Detailansicht gemäß der in Fig. 2 mit VI bezeichneten Detailansicht und
- Fig. 7: eine vergrößerte Detailansicht gemäß der in Fig. 4 mit VII bezeichneten Einzelheit.

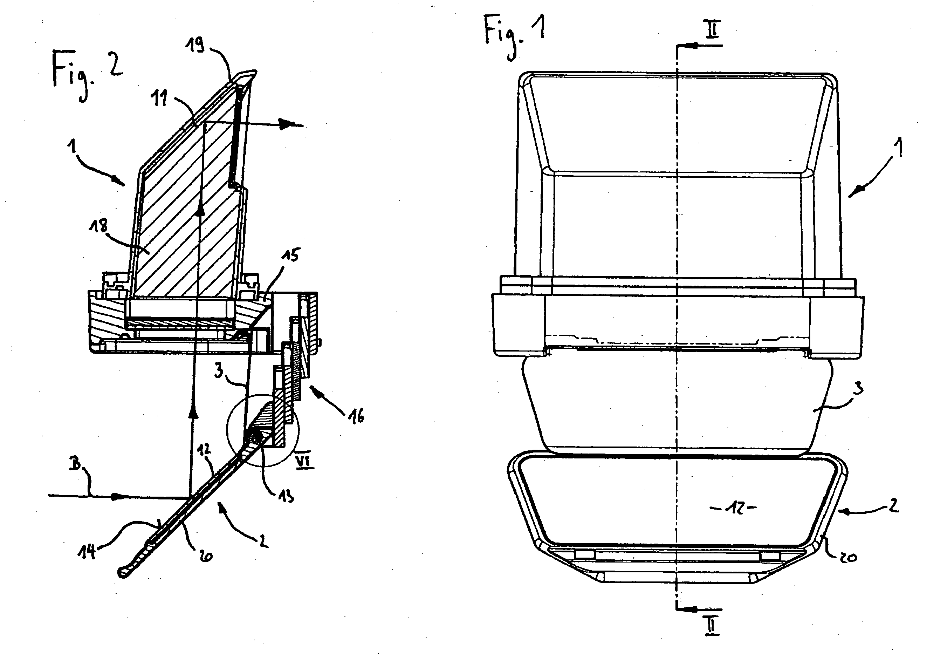

In den Fign. 1 und 2 dargestellt ist ein Klappwinkelspiegel in einer der Einblickrichtung entsprechenden Ansicht. Der Klappwinkelspiegel setzt sich zusammen aus einem teilweise aus dem Fahrzeug herausragenden Ausblickkopf 1, der mit einem Spiegelelement 11 versehen ist, und einem Einblickspiegel 2, der im Wesentlichen innerhalb des Fahrzeuginnenraums angeordnet ist. Der Einblickspiegel 2 ist mit einem Spiegelelement 12 versehen, das gegenüber dem Spiegelelement 11 des Ausblickkopfes 12 so angeordnet ist, dass bei Betrachtung des Spiegelelements 7 aus einer Richtung gemäß der Betrachtungsrichtung in Fig. 1 ein Sichtweg aus dem Fahrzeuginneren über das Spiegelelement 12 und das Spiegelelement 11 aus dem Fahrzeuginneren herausgeführt wird. Der Blickweg B eines Besatzungsmitglieds wird über den Klappwinkelspiegel parallel nach oben bis über die Außenkontur des Fahrzeugs versetzt. Zur Beobachtung des Bereichs vor dem Fahrzeug kann der Blickweg B den Ausblickkopf 1 auch unter einem in Richtung der Fahrbahn geneigten Winkel verlassen.

Wie Fig. 2 zu entnehmen ist, weist der Ausblickkopf 1 neben dem Spiegelelement 11 einen Kern 18, insbesondere aus Panzerglas oder anderen transparenten Materialien, beispielsweise PMMA auf, der den Fahrzeuginnenraum vor gegnerischen Kampfstoffen, insbesondere Sprengstoffen, schützt. Sowohl das Spiegelelement 11 als auch der beanspruchte Kern 18 sind innerhalb eines Gehäuses 19 untergebracht. Der im Fahrzeuginneren liegende Einblickspiegel 2 weist ein Spiegelelement 12 auf, welches gegenüber der Spiegelfläche 11 des Ausblickkopfes 1 in einer Art Parallelogrammanordnung angeordnet ist.

Der Einblickspiegel 2 besteht neben dem aus einem spiegelnden Material bestehenden Spiegelelement 12 aus einem das Spiegelelement 12 umgebenden Rahmen 20, der aus Gewichtsgründen aus einem Kunststoffmaterial, insbesondere einem faserverstärkten Kunststoffmaterial gefertigt ist. Der Rahmen 20 nimmt das Spiegelelement 12 auf.

Der Einblickspiegel 2 ist über eine Schwenkachse 13 schwenkbeweglich gelagert, so dass der Einblickspiegel 2 verschiedene Schwenkstellungen gegenüber einem fahrzeugfest angeordneten Montageelement 15 einnehmen kann. Beim Ausführungsbeispiel ist der Einblickspiegel 2 nicht direkt mit dem Montageelement 15 verbunden, sondern über ein teleskopierbares Element 16, welches eine Einstellung des Abstands zwischen der Drehachse 13 und dem Montageelement 15 erlaubt. Zur Justage des Einblickspiegels 2 in verschiedenen Abständen ist das Teleskopelement 16 in verschiedenen Raststellungen einrastbar.

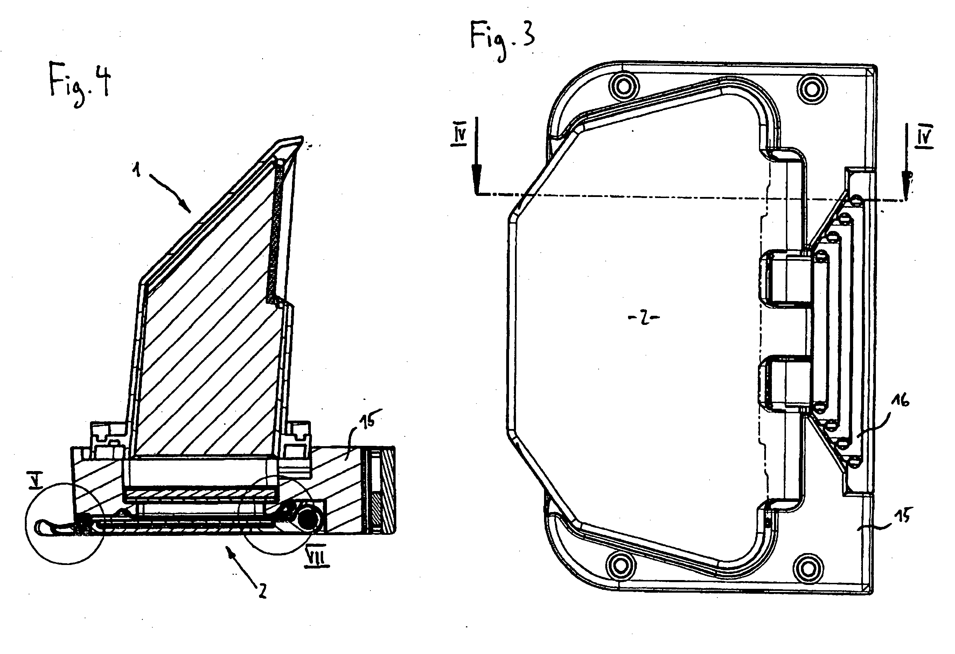

In den Fign. 1 und 2 dargestellt ist die Einblickstellung des Klappwinkelspiegels, in welcher die Achse 13 ihre untere Position gegenüber dem Montageelement 15 einnimmt und sich der Einblickspiegel 2 in einer in etwa parallelen Schwenklage zu der Spiegelfläche 11 befindet. In dieser Stellung kann ein Besatzungsmitglied gemäß dem Blickweg B aus dem Fahrzeug hinausblicken. In Fahrsituationen, in denen kein Interesse daran besteht, die Fahrzeugumgebung zu beobachten, kann der Einblickspiegel 2 in die in den Figuren 3 und 4 dargestellte Schließstellung überführt werden. Dazu wird das teleskopierbare Element 16 zusammengeschoben und der Einblickspiegel 2 um seine Schwenkachse 13 in eine zu dem Montageelement 15 parallele Schwenkstellung verschwenkt. Diese Verstellmöglichkeit, mit der der Klappwinkelspiegel von einer Einblickstellung in eine Schließstellung überführt werden kann, dient zum einen dazu, den zur Verfügung stehenden Fahrzeuginnenraum in Situationen, in denen ein Beobachten der Umgebung nicht gewünscht ist, zu vergrößern. Darüber hinaus wird erreicht, dass der Einblickspiegel 2 im unbenutzten Zustand nicht von der Decke des Fahrzeugs herunter hängt und die Besatzungsmitglieder sich daran den Kopf stoßen können. Um das Verschwenken des Einblickspiegels 2 zu vereinfachen, ist an dem der Schwenkachse 13 abgewandten Ende des Einblickspiegels 2 ein Handgriff 23 vorgesehen.

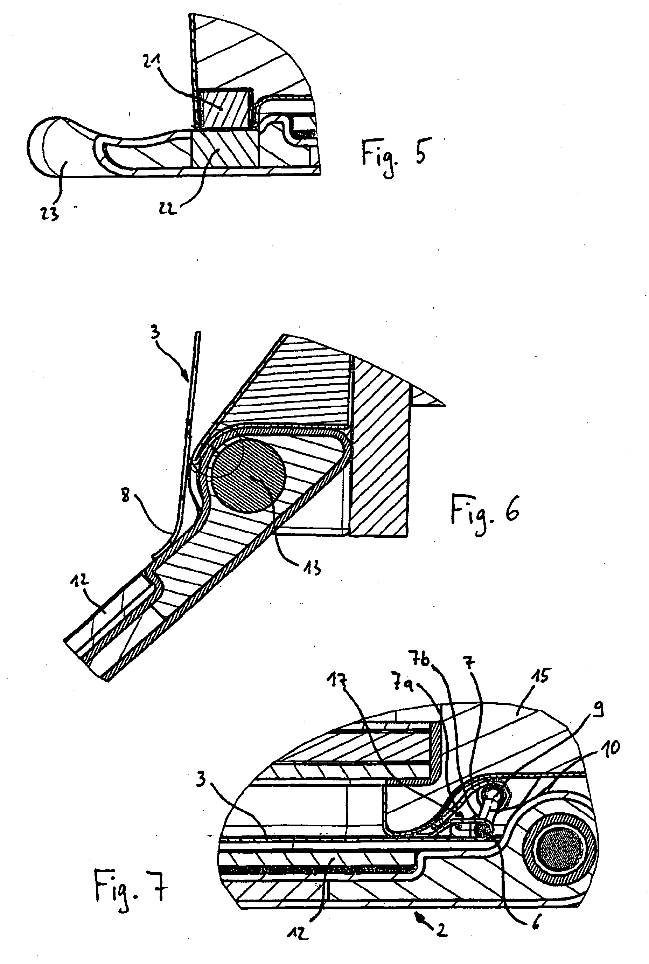

In der Schließstellung liegt der Einblickspiegel 2 so an dem Montageelement 15, dass es mit der Unterseite des Elements 15 eine ebene Fläche bildet, vgl. Fig. 4. In dieser Stellung ist der Einblickspiegel 2 über ein Paar von Magneten 21, 22, von denen einer in dem Einblickspiegel 2 und ein zweiter in dem Montageelement 15 angeordnet ist, gegen Rückschwenken gesichert. Die Magnete 21, 22 sind so angeordnet, dass sie sich in der Schließstellung des Einblickspiegels 2 gegenüberstehen, vgl. Fig. 5.

Einzelheiten der Strahlfalle 3 werden nachfolgend beschrieben.

Wie den Figuren 1 und 2 zu entnehmen ist, handelt es sich bei der Strahlfalle 3 um ein dünnflächiges nach Art einer starren Folie ausgebildetes Element geringer Dicke, so dass es in der Schließstellung des Einblickspiegels 2 einen geringen Bauraum zwischen dem Ausblickkopf 1 und dem Einblickspiegel 2 benötigt.

In den Figuren 1 und 2 ist die Einblickstellung des Klappwinkelspiegels 2 dargestellt. In dieser Stellung sind Rückreflektionen von von außen einfallenden Lichtstrahlen, etwa der Sonnenstrahlung, nicht möglich, da ein einfallender Lichtstrahl in umgekehrter Richtung zum Blickweg B über das Spiegelelement 11 des Ausblickkopfes 1 auf das Spiegelelement 12 des Einblickspiegels 2 und von dort in den Fahrzeuginnenraum gelenkt wird. In der Einblickstellung befindet sich die Strahlfalle 3 daher abseits des Blickwegs B in einer im wesentlichen vertikalen Ausrichtung in Blickrichtung gesehen vor dem teleskopierbaren Element 16, welches von der im wesentlichen trapezförmigen Fläche der Strahlfalle 3 in dieser Stellung verdeckt wird.

Der Einblickspiegel 2 wird aus der in Fig. 2 dargestellten Einblickstellung durch Zusammenschieben des Teleskopelements 16 und durch Schwenken des Einblickspiegels 2 um dessen Schwenkachse 13 in die in den Figuren 3 und 4 dargestellte Schließstellung überführt. Beim Schließen des Einblickspiegels 2 gleitet die Strahlfalle 3 entlang der Oberfläche 14 des Spiegelelements 2, wodurch sich eine mechanische Kopplung der Strahlfalle 3 mit dem Einblickspiegel 2 ergibt.

Weitere Einzelheiten der Strahlfalle 3 werden nachfolgend anhand der vergrößerten Detailansicht in Fig. 7 beschrieben.

In der Schließstellung befindet sich die Strahlfalle 3 in paralleler Ausrichtung zu dem Einblickspiegel 2 zwischen dem Einblickspiegel 2 und dem weiter oben angeordneten Ausblickkopf 1 bzw. dessen Spiegelfläche 11, weshalb in den Klappwinkelspiegel eintretende Lichtstrahlen auf die Strahlfalle 3 treffen, wodurch Rückreflektionen aus dem Klappwinkelspiegel unterbunden werden. Um beim Öffnen des Einblickspiegels 2, das heißt beim Überführen des Einblickspiegels 2 von der Schließstellung in die Einblickstellung, ein definiertes Rückschwenken der Strahlfalle 3 zu erreichen, ist eine beim Ausführungsbeispiel nach Art einer Schenkelfeder gestaltete Feder 7 vorgesehen, deren erster Schenkel 7a sich gegen das fahrzeugfeste Montageelement 15 und deren zweiter Schenkel 7b sich gegen die Strahlfalle 3 abstützt, wodurch die Anlage der Strahlfalle 3 an dem Einblickspiegel 2 stets unter einer gewissen Federspannung steht. Die Strahlfalle 3 ist an einer Schwenkachse 6, die von der Achse 9 der Feder 7 beabstandet ist, schwenkbeweglich angelenkt. Die Schwenkachse 6 wird von einem Drahtstift gebildet, der durch eine Abkantung 17 des angelenkten Endes der Strahlfalle 3 hindurchgeführt ist. Die Achse 9 des Federelements 7 ist mit der Schwenkachse 6 über ein beweglich angeordnetes Zwischenelement 10 gekoppelt, wodurch sich eine kompakt bauende, in dem Zwischenraum zwischen dem Einblickspiegel 2 und dem Montageelement 15 unterbringbare Bauweise ergibt.

Im Bereich der Anlage ist die Strahlfalle 3 mit einer Rundung 8 versehen, welche ein Entlanggleiten der Strahlfalte 3 an dem Spiegelelement 12 vereinfacht und Kratzern vorbeugt. Auf der Rückseite der Strahlfalle 3 kann eine Beschichtung aus einem Reinigungsmaterial oder eine Reinigungsbürste vorgesehen sein, die beim Schließen des Klappwinkelspiegels eine Reinigung des Spiegelelements 12 bewirkt.

### Bezugszeichenliste:

- 1: Ausblickkopf
- 2: Einblickspiegel
- 3: Strahlfalle
- 4: Ende
- 5: Ende
- 6: Schwenkachse
- 7: Feder
- 7a: Schenkel
- 7b: Schenkel
- 8: Rundung
- 9: Achse
- 10: Zwischenelement
- 11: Spiegelelement
- 12: Spiegelelement
- 13: Schwenkachse
- 14: Oberfläche
- 15: Montageelement
- 16: teleskopierbares Element
- 17: Abkantung
- 18: Glaskern
- 19: Gehäuse
- 20: Rahmen
- 21: Magnet
- 22: Magnet
- 23: Handgriff

- B: Blickweg

## Patentansprüche

1. Klappwinkelspiegel für Kampffahrzeuge mit einem Ausblickkopf (1), einem gegenüber dem Ausblickkopf (1) bewegbar angeordneten Einblickspiegel (2), der von einer Einblickstellung in eine Schließstellung bewegbar ist, und einer Strahlfalle (3), die in der Schließstellung zwischen dem Einblickspiegel (2) und dem Ausblickkopf (1) angeordnet ist,
**dadurch gekennzeichnet,**
**dass** die Strahlfalle (3) derart ausgebildet ist, dass sie sich bei einer Bewegung des Einblickspiegels (2) in die Schließstellung selbsttätig zwischen den Einblickspiegel (2) und den Ausblickkopf (1) bewegt.

2. Klappwinkelspiegel nach Anspruch 1, **dadurch gekennzeichnet, dass** die Strahlfalle (3) mit dem Einblickspiegel (2) mechanisch gekoppelt ist.

3. Klappwinkelspiegel nach einem der Ansprüche 1 oder 2, **dadurch gekennzeichnet, dass** ein erstes Ende der Strahlfalle (3) an einer Schwenkachse (6) schwenkbeweglich angeordnet ist.

4. Klappwinkelspiegel nach Anspruch 3, **dadurch gekennzeichnet, dass** ein zweites Ende (5) der Strahlfalle (3) an dem Einblickspiegel (2) anliegt.

5. Klappwinkelspiegel nach Anspruch 4, **dadurch gekennzeichnet, dass** das zweite Ende (5) der Strahlfalle (3) unter dem Einfluss einer Feder (7) an dem Einblickspiegel (2) anliegt.

6. Klappwinkelspiegel nach einem der Ansprüche 4 oder 5, **dadurch gekennzeichnet, dass** das zweite Ende (5) der Strahlfalle (3) eine Rundung (8) aufweist.

7. Klappwinkelspiegel nach einem der vorhergehenden Ansprüche, dadurch gekenntzeichnet, dass die Strahlfalle (3) ein flächiges Element ist.

8. Klappwinkelspiegel nach einem der vorhergehenden Ansprüche, **dadurch gekennzeichnet, dass** die Strahlfalle (3) aus einem optisch nicht reflektierenden Material besteht.

9. Klappwinkelspiegel nach einem der Ansprüche 3 bis 8, **dadurch gekennzeichnet, dass** die Schwenkachse (6) der Strahlfalle (3) und die Achse (9) der Feder (7) voneinander beabstandet sind.

10. Klappwinkelspiegel nach Anspruch 9, **dadurch gekennzeichnet, dass** die Schwenkachse (6) und die Achse (9) über ein Zwischenelement (10) miteinander gekoppelt sind.

## Claims

1. Articulated periscope mirror for military vehicles comprising a look-out head (1), a look-in mirror (2) that is arranged movably relative to the look-out head (1) and is movable from a look-in position into a closed position, and a beam trap (3) that in the closed position is disposed between the look-in mirror (2) and the look-out head (1),
**characterized in**
**that** the beam trap (3) is configured in such a way that it moves automatically into a position between the look-in mirror (2) and the look-out head (1) upon a movement of the look-in mirror (2) into the closed position.

2. Articulated periscope mirror according to claim 1, **characterized in that** the beam trap (3) is mechanically coupled to the look-in mirror (2).

3. Articulated periscope mirror according to one of claims 1 or 2, **characterized in that** a first end of the beam trap (3) is disposed in an articulated manner on a swivel axis (6).

4. Articulated periscope mirror according to claim 3, **characterized in that** a second end (5) of the beam trap (3) rests against the look-in mirror (2).

5. Articulated periscope mirror according to claim 4, **characterized in that** the second end (5) of the beam trap (3) rests against the look-in mirror (2) under the influence of a spring (7).

6. Articulated periscope mirror according to one of claims 4 or 5, **characterized in that** the second end (5) of the beam trap (3) has a curvature (8).

7. Articulated periscope mirror according to one of the preceding claims, **characterized in that** the beam trap (3) is a two-dimensional element.

8. Articulated periscope mirror according to one of the preceding claims, **characterized in that** the beam trap (3) is made of an optically non-reflective material.

9. Articulated periscope mirror according to one of claims 3 to 8, **characterized in that** the swivel axis (6) of the beam trap (3) and the axis (9) of the spring (7) are spaced apart from one another.

10. Articulated periscope mirror according to claim 9, **characterized in that** the swivel axis (6) and the axis (9) are coupled to one another by an intermediate element (10).

## Revendications

1. Périscope escamotable pour véhicules de combat doté d'une tête d'observation (1), d'un miroir de visualisation (2) disposé de manière à pouvoir être déplacé par rapport à la tête d'observation (1), lequel peut être déplacé depuis une position de visualisation jusqu'à une position de fermeture, et est doté d'un système de capture de rayonnement (3), qui est disposé, dans la position de fermeture, entre le miroir de visualisation (2) et la tête d'observation (1),
**caractérisé en ce que**
le système de capture de rayonnement (3) est réalisé de telle manière qu'il se déplace automatiquement entre le miroir de visualisation (2) et la tête d'observation (1) lorsque le miroir de visualisation (2) se déplace dans la position de fermeture.

2. Périscope escamotable selon la revendication 1, **caractérisé en ce que** le système de capture de rayonnement (3) est couplé mécaniquement au miroir de visualisation (2).

3. Périscope escamotable selon l'une quelconque des revendications 1 ou 2, **caractérisé en ce qu'**une première extrémité du système de capture de rayonnement (3) est disposée de manière mobile par pivotement au niveau d'un axe de pivotement (6).

4. Périscope escamotable selon la revendication 3, **caractérisé en ce qu'**une deuxième extrémité (5) du système de capture de rayonnement (3) repose contre le miroir de visualisation (2).

5. Périscope escamotable selon la revendication 4, **caractérisé en ce que** la deuxième extrémité (5) du système de capture de rayonnement (3) repose contre le miroir de visualisation (2) sous l'influence d'un ressort (7).

6. Périscope escamotable selon l'une quelconque des revendications 4 ou 5, **caractérisé en ce que** la deuxième extrémité (5) du système de capture de rayonnement (3) présente une courbure (8).

7. Périscope escamotable selon l'une quelconque des revendications précédentes, **caractérisé en ce que** le système de capture de rayonnement (3) est un élément plat.

8. Périscope escamotable selon l'une quelconque de revendications précédentes, **caractérisé en ce que** le système de capture de rayonnement (3) est constitué d'un matériau non réfléchissant optiquement.

9. Périscope escamotable selon l'une quelconque des revendications 3 à 8, **caractérisé en ce que** l'axe de pivotement (6) du système de capture de rayonnement (3) et l'axe (9) du ressort (7) sont espacés l'un de l'autre.

10. Périscope escamotable selon la revendication 9, **caractérisé en ce que** l'axe de pivotement (6) et l'axe (9) sont couplés l'un à l'autre par l'intermédiaire d'un élément intermédiaire (10).
